# EUROPEAN PATENT APPLICATION

(11) **EP 4 614 905 A1**
(43) Date of publication of application: **10.09.2025**
(21) Application number: 22964125.3
(22) Date of filing: 04.11.2022
(51) Int. Cl.: H04L 27/00

(54) **REPORTING METHOD AND APPARATUS FOR FAILURE REPORT**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/130132
(87) International publication number: WO 2024/092824

(57) **Abstract**

Disclosed in the embodiments of the present disclosure are a reporting method and apparatus for a failure report, which can be applied to a terminal sidelink scenario in an unlicensed frequency band (SL-U). The method comprises: a terminal device determines to trigger reporting of a sidelink (SL) continuous listen-before-talk (LBT) failure report, and determines an uplink resource for transmitting the SL continuous LBT failure report; and the terminal device sends on the uplink resource the SL continuous LBT failure report to a network device. In the implemented embodiments of the present disclosure, when determining to trigger reporting of the SL continuous LBT failure report, the terminal device can quickly report to the network device the SL continuous LBT failure report by means of the uplink resource, such that the network device can perform recovery processing on an SL continuous LBT failure in time, thereby preventing the terminal device from continuously triggering a connection reestablishment procedure, and thus improving the data transmission efficiency.

## Description

### TECHNICAL FIELD

The disclosure relates to the field of communication technologies, and in particular to methods for reporting a failure report and related devices.

### BACKGROUND

In the related art, Release 18 (R18) supports a Sidelink (SL) communication (also called direct communication) to use unlicensed spectrum, and a terminal needs to perform listen before talk (LBT) to send Sidelink data on the unlicensed spectrum. The consistent LBT mechanism is also applicable to the Sidelink communication on the unlicensed spectrum.

However, there is currently a lack of effective means for reporting an SL consistent LBT failure report.

### SUMMARY

Embodiments of the disclosure provide methods for reporting a failure report and related devices, which may be applied to a terminal Sidelink (SL) communication over an unlicensed frequency band (Sidelink-unlicensed, SL-U) scenario. When a terminal determines to trigger a reporting of an SL consistent listen before talk (LBT) failure report, the terminal may quickly report the SL consistent LBT failure report to a network device through an uplink resource, so that the network device may promptly perform a recovery processing on the SL consistent LBT failure, which may avoid the terminal from constantly triggering a connection reconstruction process, thereby improving efficiency of data transmission.

In a first aspect, embodiments of the disclosure provide a method for reporting a failure report. The method is performed by a terminal. The method includes:
determining to trigger a reporting of an SL consistent LBT failure report, and determining an uplink resource for transmitting the SL consistent LBT failure report; and
sending, to a network device, the SL consistent LBT failure report on the uplink resource.

In this technical solution, in a case that the terminal determines to trigger the reporting of the SL consistent LBT failure report, the SL consistent LBT failure report may be quickly reported to the network device through the determined uplink resource, so that the network device may promptly recover the SL consistent LBT failure, which may avoid the terminal from constantly triggering a connection reconstruction process, thereby improving efficiency of data transmission.

In a possible implementation, determining to trigger the reporting of the SL consistent LBT failure report includes:
determining, by the terminal, to trigger the reporting of the SL consistent LBT failure report, in a case that a detection granularity of an SL consistent LBT failure is a resource pool granularity, the terminal determines that at least one resource pool triggers the SL consistent LBT failure, and the SL consistent LBT failure on the at least one resource pool is not canceled.

In another possible implementation, determining to trigger the reporting of the SL consistent LBT failure report includes:
determining, by the terminal, to trigger the reporting of the SL consistent LBT failure report, in a case that a detection granularity of an SL consistent LBT failure is a resource block (RB) set granularity, the terminal determines that at least one RB set triggers the SL consistent LBT failure, and the SL consistent LBT failure on the at least one RB set is not canceled.

In another possible implementation, determining to trigger the reporting of the SL consistent LBT failure report includes:
determining, by the terminal, to trigger the reporting of the SL consistent LBT failure report, in a case that a detection granularity of an SL consistent LBT failure is a bandwidth part (BWP) granularity, the terminal determines that at least one BWP or cell triggers the SL consistent LBT failure, and the SL consistent LBT failure on the at least one BWP or cell is not canceled.

In a possible implementation, determining the uplink resource for transmitting the SL consistent LBT failure report includes:
determining that there is an uplink resource, for the terminal, used for a new transmission, in which the uplink resource used for the new transmission is able to accommodate the SL consistent LBT failure report and a subheader of the SL consistent LBT failure report; and
determining the uplink resource used for the new transmission as the uplink resource for transmitting the SL consistent LBT failure report.

In another possible implementation, determining the uplink resource for transmitting the SL consistent LBT failure report includes:
determining that there is no uplink resource, for the terminal, used for a new transmission and/or that an uplink resource used for a new transmission is unable to accommodate the SL consistent LBT failure report and a subheader of the SL consistent LBT failure report;
triggering a scheduling request (SR); and
determining an SR configuration associated with the SR triggered, and sending the SR based on the SR configuration associated with the SR triggered to request the uplink resource for transmitting the SL consistent LBT failure report.

In a possible implementation, the SR configuration associated with the SR triggered includes any one of:
a dedicated SR configuration, in which the dedicated SR configuration is an SR configuration dedicated to an SL consistent LBT failure recovery;
any available SR configuration; or
an SR configuration arriving earliest among at least one available SR configuration.

In a possible implementation, determining the uplink resource for transmitting the SL consistent LBT failure report further includes:
determining that no SR configuration is associated with the SR triggered; and
triggering a random access channel (RACH), initiating the RACH based on a dedicated RACH resource to request the uplink resource for transmitting the SL consistent LBT failure report; in which the dedicated RACH resource is an RACH resource dedicated to an SL consistent LBT failure recovery.

In a second aspect, embodiments of the disclosure provide another method for reporting a failure report. The method is performed by a network device. The method includes:
sending configuration information to a terminal, in which the configuration information includes a dedicated scheduling request (SR) configuration and/or a dedicated random access channel (RACH) configuration;
in which the dedicated SR configuration and/or the dedicated RACH configuration is used to assist the terminal in requesting an uplink resource from the network device, the uplink resource being used for transmitting an SL consistent LBT failure report.

In a third aspect, embodiments of the disclosure provide a communication device. The communication device has some or all of functions of the terminal described above in the methods of the first aspect. For example, the functions of the communication device may be some or all of the functions described in embodiments of the disclosure or may be the functions of implementing any one of embodiments of the disclosure alone. The functions may be implemented by hardware or by hardware executing corresponding software. The hardware or software includes one or more units or modules corresponding to the above functions.

In one implementation, the structure of the communication device may include a transceiver module and a processing module which is configured to support the communication device to perform the corresponding functions in the above methods. The transceiver module is configured to support communication between the communication device and other devices. The communication device may also include a storage module, which is coupled to the transceiver module and the processing module and is configured to store a computer program and data necessary for the communication device.

As an example, the processing module may be a processor, the transceiver module may be a transceiver or a communication interface, and the storage module may be a memory.

In a fourth aspect, embodiments of the disclosure provide another communication device. The communication device has some or all of functions of the network device described above in method examples of the second aspect. For example, the functions of the communication device may be some or all of the functions described in embodiments of the disclosure or may be the functions of implementing any one of embodiments of the disclosure alone. The functions may be implemented by hardware or may be implemented by hardware executing corresponding software. The hardware or software includes one or more units or modules corresponding to the above functions.

In one implementation, the structure of the communication device may include a transceiver module and a processing module. The processing module is configured to support the communication device to perform the corresponding functions in the above methods. The transceiver module is used to support communication between the communication device and other devices. The communication device may also include a storage module, which is coupled with the transceiver module and the processing module and is configured to store a computer program and data necessary for the communication device.

In a fifth aspect, embodiments of the disclosure provide a communication device. The communication device includes a processor. When the processor calls a computer program in a memory, the methods described in the first aspect are performed.

In a sixth aspect, embodiments of the disclosure provide a communication device. The communication device includes a processor. When the processor calls a computer program in a memory, the methods described in the second aspect are performed.

In a seventh aspect, embodiments of the disclosure provide a communication device. The communication device includes a processor and a memory. The memory has a computer program stored thereon. The processor is configured to perform the computer program stored on the memory to enable the communication device to perform the methods described in the first aspect above.

In an eighth aspect, embodiments of the disclosure provide a communication device. The communication device includes a processor and a memory. The memory has a computer program stored thereon. The processor is configured to perform the computer program stored on the memory to enable the communication device to perform the methods described in the second aspect above.

In a ninth aspect, embodiments of the disclosure provide a communication device. The communication device includes a processor and an interface circuit. The interface circuit is configured to receive code instructions and transmit the code instructions to the processor, and the processor is configured to run the code instructions to enable the communication device to perform the methods described in the first aspect above.

In a tenth aspect, embodiments of the disclosure provide a communication device. The communication device includes a processor and an interface circuit. The interface circuit is configured to receive code instructions and transmit the code instructions to the processor, and the processor is configured to run the code instructions to enable the communication device to perform the methods described in the second aspect above.

In the eleventh aspect, embodiments of the disclosure provide a system for reporting a failure report. The system includes the communication device described in the third aspect and the communication device described in the fourth aspect. Or, the system includes the communication device described in the fifth aspect and the communication device described in the sixth aspect. Or, the system includes the communication device described in the seventh aspect and the communication device described in the eighth aspect. Or, the system includes the communication device described in the ninth aspect and the communication device described in the tenth aspect.

In a twelfth aspect, embodiments of the disclosure provide a computer-readable storage medium. The computer-readable storage medium is configured to store instructions used by the above-mentioned terminal. When the instructions are performed, the terminal is enabled to perform the methods described in the above first aspect.

In a thirteenth aspect, embodiments of the disclosure provide a readable storage medium. The readable storage medium is configured to store instructions used by the above-mentioned network device. When the instructions are performed, the network device is enabled to perform the methods described in the above second aspect.

In a fourteenth aspect, the disclosure provides a computer program product including a computer program, which, when executed on a computer, enables a computer to perform the methods described in the first aspect above.

In a fifteenth aspect, the disclosure provides a computer program product including a computer program, which, when executed on a computer, enables the computer to perform the methods described in the above second aspect.

In a sixteenth aspect, the disclosure provides a chip system. The chip system includes at least one processor and an interface, for supporting a terminal to implement functions involved in the first aspect, for example, determining or processing at least one of data and information involved in the above methods. In a possible implementation, the chip system also includes a memory, which is configured to store a computer program and data necessary for the terminal. The chip system may be composed of a chip or may include chip(s) and other discrete devices.

In a seventeenth aspect, the disclosure provides a chip system. The chip system includes at least one processor and an interface, for supporting a network device to implement functions involved in the second aspect, for example, determining or processing at least one of data and information involved in the above methods. In a possible implementation, the chip system also includes a memory, which is configured to store a computer program and data necessary for the network device. The chip system may be composed of chip(s) or may include a chip and other discrete devices.

In an eighteenth aspect, the disclosure provides a computer program, which, when executed on a computer, enables the computer to perform the methods described in the first aspect.

In the nineteenth aspect, the disclosure provides a computer program which, when executed on a computer, enables the computer to perform the methods described in the second aspect.

### BRIEF DESCRIPTION OF THE DRAWINGS

In order to more clearly illustrate technical solutions in embodiments of the disclosure or related arts, the drawings required for use in embodiments of the disclosure or the related arts will be described below.
FIG. 1 is a schematic diagram illustrating an architecture of a communication system according to an embodiment of the disclosure.
FIG. 2 is a schematic flowchart illustrating a method for reporting a failure report according to an embodiment of the disclosure.
FIG. 3 is a flowchart illustrating a method for reporting a failure report according to an embodiment of the disclosure.
FIG. 4 is a flowchart illustrating a method for reporting a failure report according to an embodiment of the disclosure.
FIG. 5 is a flowchart illustrating another method for reporting a failure report according to an embodiment of the disclosure.
FIG. 6 is a schematic diagram illustrating a communication device according to an embodiment of the disclosure.
FIG. 7 is a schematic diagram illustrating another communication device according to an embodiment of the disclosure.
FIG. 8 is a schematic diagram illustrating a chip according to an embodiment of the disclosure.

### DETAILED DESCRIPTION

Embodiments of the disclosure will be described in detail below, and examples of the embodiments will be shown in the accompanying drawings, in which same or similar reference numerals throughout represent same or similar elements or elements having same or similar functions. The embodiments described below with reference to the accompanying drawings are illustrative, are intended to be used to explain the disclosure and should not be construed as limitations on the disclosure. In the description of the disclosure, unless otherwise specified, the symbol "/" means "or". For example, the term "A/B" may mean "A or B". The term "and/or" in the disclosure is merely a description of an association relationship of associated objects, indicating that three relationships may exist. For example, "A and/or B" may mean "only A", "only B", and "both A and B".

The terms used in the embodiments of the disclosure are only for the purpose of describing specific embodiments and are not intended to limit the embodiments of the disclosure. The singular forms "a", "an" and "the" used in the embodiments and appended claims of the disclosure are also intended to include plural forms, unless the context clearly indicates other meanings.

It is understandable that although the terms "first", "second", "third", etc. may be used to describe various information in the embodiments of the disclosure, this information should not be limited to these terms. These terms are only used to distinguish the same type of information from each other. For example, without departing from the scope of the embodiments of the disclosure, "first information" may also be referred to as "second information", and similarly, the "second information" may also be referred to as the "first information". Depending on the context, the words "if" and "whether" as used herein may be interpreted as "while," "when" or "in response to determining that".

Embodiments of the disclosure will be described in detail below, and examples of the embodiments will be shown in the accompanying drawings, in which same or similar reference numerals throughout represent same or similar elements or elements. The embodiments described below with reference to the accompanying drawings are illustrative, are intended to be used to explain the disclosure, and should not be construed as limitations on the disclosure.

It is noteworthy that in order to support direct communication between terminals, a Sidelink (SL) communication is introduced, and an interface between terminals is PC-5. Based on a correspondence between a sending terminal and a receiving terminal, three transmission modes are supported on the Sidelink, such as unicast, multicast and broadcast. The sending terminal sends, on a Physical Sidelink Control Channel (PSCCH), a Sidelink Control Information (SCI) and sends, on a Physical Sidelink Shared Channel (PSSCH), a second stage SCI which carries a resource location of transmission data, a source identifier and a target identifier. For a Hybrid Automatic Repeat reQuest (HARQ) feedback-enabled data packet, the receiving terminal performs, on a Physical Sidelink Feedback Channel (PSFCH), a Hybrid Automatic Retransmission Request Acknowledgement (HARQ-ACK) feedback on the PSSCH.

There are two ways to allocate transmission resources for the Sidelink communication, one is a dynamically scheduled way by a network (called "resource allocation mode 1"), and the other is an autonomous selection way that the transmission resources are autonomously selected by the terminal from a resource pool broadcast by the network (called "resource allocation mode 2"). The "dynamically scheduled" means that the network dynamically allocates the transmission resources on the Sidelink to the terminal based on cached data reported by the terminal, while the "autonomous selection "means that the terminal autonomously and randomly selects the transmission resources from the resource pool broadcast by the network or from the resource pool pre-configured. The network device may configure multiple resource pools for the terminal on one BandWidth Part (BWP). The specific allocation way to be used is configured by the network device through a Radio Resource Control (RRC) signaling.

Fifth-Generation (5G) New Radio Unlicensed (NR-U) is a project in Release 16 (R16) of Third-Generation Partnership Project (3GPP), which provides operators with the necessary technology to fully integrate unlicensed spectrum into 5G networks. The NR-U supports uplink and downlink operations in unlicensed frequency bands. In the NR-U, channel access for both downlink and uplink relies on the listen before talk (LBT) feature. A wireless device or a base station needs to first "sense" a communication channel and find that there is no communication before any transmission. When a communication channel is an unlicensed wideband carrier (for example, hundreds of megahertz), the LBT process relies on detecting energy levels on multiple sub-bands of the communication channel. LBT parameters (such as type/duration, clear channel assessment parameter, etc.) are configured on the wireless device by the base station.

"Consistent LBT failure" is a new feature defined in the NR-U. The terminal counts the number of uplink LBT failures on each BWP. The network device configures a maximum consistent LBT failure number (such as lbt-FailureInstanceMaxCount) and a consistent LBT failure detection timer (such as lbt-FailureDetectionTimer) for the terminal per serving cell through an RRC signaling (such as lbt-FailureRecoveryConfig), to count the consistent LBT failure. The terminal maintains a variable (such as LBT_counter) for each cell, and an initial value of the variable is 0. For each cell that is configured with lbt-FailureRecoveryConfig, when the terminal receives an LBT failure indication submitted by a physical layer, the consistent LBT failure detection timer is started or restarted, and the LBT_counter is increased by 1. When the value of LBT_counter is greater than or equal to the maximum consistent LBT failure number, the activated BWP on the cell triggers the consistent LBT failure. When the consistent LBT failure detection timer expires, or when the upper layer reconfigures the maximum consistent LBT failure number/the consistent LBT failure detection timer, or when all consistent LBT failures on this serving cell are canceled, the terminal resets the LBT_counter to 0. When the terminal detects the consistent LBT failure on an activated BWP of a Primary Cell (PCell) or a Primary Secondary Cell (PSCell), in a case that there is another BWP configured with a Physical Random Access Channel (PRACH) resource on the cell, the terminal triggers a BWP switch to switch the activated BWP to the BWP configured with the PRACH resource and initiates a Random Access Channel (RACH) process. In a case that the terminal detects the consistent LBT failure on each of N BWPs configured with PRACH resources in the primary cell, the terminal initiates a Radio Link Failure (RLF) recovery process. In a case that the consistent LBT failure is detected on an activated BWP of a secondary cell (SCell), the terminal indicates, to a network side through a Media Access Control Control Unit (MAC CE), a cell identity of a cell where the consistent LBT failure occurs. The MAC CE may carry multiple cell identities of cells where the consistent LBT failure is detected. The MAC CE is sent through other serving cells where no consistent LBT failure occurs.

In the related art, Release 18 (R18) supports the use of unlicensed spectrum for the Sidelink communication, and the LBT is required for the terminal to send Sidelink data on the unlicensed spectrum. The consistent LBT mechanism is also applicable to the Sidelink communication on the unlicensed spectrum.

However, there is currently a lack of effective means for reporting SL consistent LBT failure report.

To this end, embodiments of the disclosure provide a method for reporting a failure report. When the terminal determines to trigger a reporting of an SL consistent LBT failure report, the terminal may quickly report the SL consistent LBT failure report to a network device through an uplink resource, so that the network device may promptly recover an SL consistent LBT failure, which avoids the terminal from constantly triggering the connection reconstruction process, thereby improving the efficiency of data transmission.

In order to better understand the methods for reporting a failure report according to embodiments of the disclosure, the communication system to which embodiments of the disclosure is applicable is first described below.

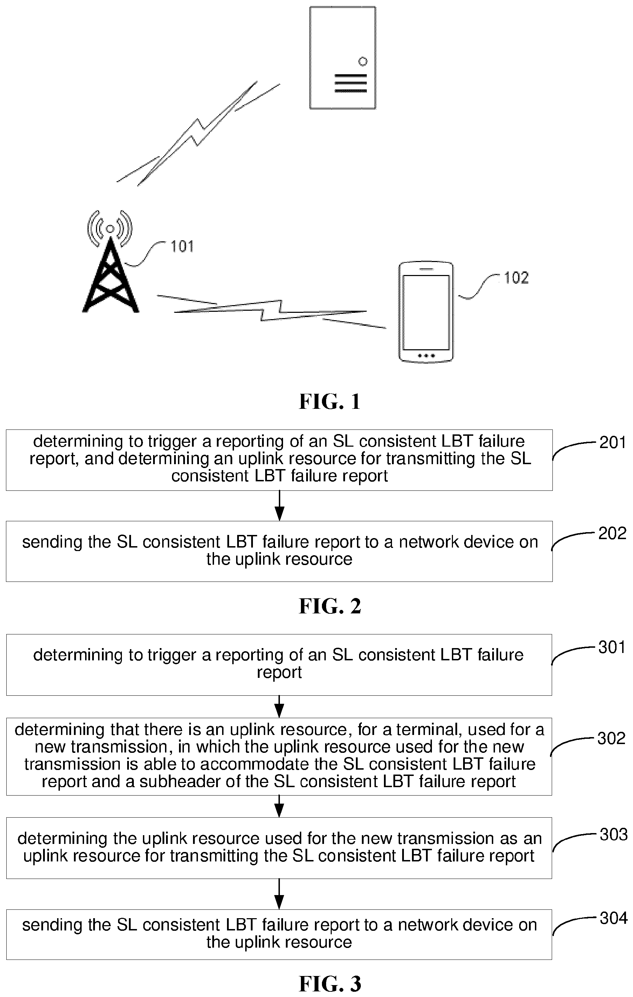

FIG. 1 is a schematic diagram of an architecture of a communication system according to an embodiment of the disclosure. As illustrated in FIG. 1, the communication system may include, but is not limited to, one network device and one terminal. The number and form of devices illustrated in FIG. 1 are only used as examples and do not constitute a limitation on the embodiments of the disclosure. In actual applications, two or more network devices and two or more terminals may be included. The communication system illustrated in FIG. 1 includes, for example, a network device 101 and a terminal 102.

It is noteworthy that the technical solution of the embodiments of the disclosure may be applied to various communication systems, for example, long term evolution (LTE) system, fifth generation (5G) mobile communication system, 5G new radio (NR) system, or other future new mobile communication systems. It is noteworthy that the Sidelink in the embodiments of the disclosure may also be called a side link or a direct link.

The network device 101 in embodiments of the disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. The embodiments of the disclosure do not limit the specific technology and specific device form adopted by the network device. The network device in embodiments of the disclosure may be composed of a centralized unit (CU) and distributed unit(s) (DU). The CU may also be referred to as a control unit. The CU-DU structure may be used to split the protocol layer of the network device, such as a base station. The functions of some protocol layers are placed in the CU for centralized control, the functions of the remaining part or all of the protocol layers are distributed in the DU(s), and the DU(s) is/are centrally controlled by the CU.

The terminal 102 in embodiments of the disclosure is an entity on the user side for receiving or transmitting signals, such as a mobile phone. The terminal may also be referred to as a terminal device, user equipment (UE), mobile station (MS), mobile terminal (MT), etc. The terminal may be a vehicle with communication function, a smart vehicle, a mobile phone, a wearable device, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the disclosure do not limit the specific technology and specific device form adopted by the terminal.

It is understandable that the communication system described in embodiments of the disclosure is for the purpose of more clearly illustrating the technical solution of embodiments of the disclosure, and does not constitute a limitation on the technical solution according to the embodiments of the disclosure. A person skilled in the art may know that with the evolution of the system architecture and the emergence of new business scenarios, the technical solution according to the embodiments of the disclosure is also applicable to similar technical problems.

The following is a detailed introduction of the methods for reporting a failure report and related devices according to the disclosure in conjunction with the accompanying drawings.

FIG. 2 is a flowchart illustrating a method for reporting a failure report according to an embodiment of the disclosure. It is noteworthy that the method for reporting a failure report according to embodiments of the disclosure may be performed by a terminal. As illustrated in FIG. 2, the method may include, but is not limited to, the following.

At block 201, it is determined to trigger a reporting of an SL consistent LBT failure report, and an uplink resource for transmitting the SL consistent LBT failure report is determined.

In embodiments of the disclosure, the terminal is in an RRC connected state. In a possible implementation, the terminal may operate in resource allocation mode 1 or in resource allocation mode 2.

In one possible implementation, the network device may configure, per serving cell, a maximum SL consistent LBT failure number and an SL consistent LBT failure detection timer for the terminal through an RRC signaling, for counting an SL consistent LBT failure. The terminal maintains a variable for each cell, and an initial value of the variable is 0. For each activated cell that is configured with an RRC signaling, when the terminal receives an LBT failure indication submitted by a physical layer, the terminal starts or restarts the SL consistent LBT failure detection timer, and the variable is increased by 1. When the value of the variable is greater than or equal to the maximum SL consistent LBT failure number, the serving cell triggers the SL consistent LBT failure.

In embodiments of the disclosure, different detection granularities of the SL consistent LBT failure will result in different implementations for determining to report the SL consistent LBT failure report. In one possible implementation, the detection granularity may include, but is not limited to, any of: resource pool granularity, Resource Block (RB) set granularity, or BWP granularity.

In embodiments of the disclosure, when it is determined that it needs to trigger the reporting of the SL consistent LBT failure report, the terminal may determine the uplink resource for transmitting the SL consistent LBT failure report. In one possible implementation, the SL consistent LBT failure report may be sent through an uplink resource, on the terminal, used for a new transmission, and the uplink resource used for the new transmission is the uplink resource permitted for a first transmission of data packets (as distinguished from retransmission). In another possible implementation, when there is no uplink resource, on the terminal, used for the new transmission, the SR is triggered, the uplink resource is requested through an SR configuration associated with the triggered SR, and the SL consistent LBT failure report is sent through the uplink resource. In yet another possible implementation, when there is no uplink resource, on the terminal, used for the new transmission, the terminal may request the uplink resource through a dedicated RACH resource to send the SL consistent LBT failure report.

At block 202, an SL consistent LBT failure report is sent to a network device on the uplink resource.

In some examples, the terminal may send the SL consistent LBT failure report to the network device through the uplink resource. In a possible implementation, the terminal may send the SL consistent LBT failure report to the network device through MAC CE on the uplink resource. In some embodiments, the SL consistent LBT failure report may include cell indication information of a cell where the SL consistent LBT failure is detected. In some examples, the SL consistent LBT failure report may be used for indicating, to the network device, a cell identifier of a cell where the SL consistent LBT failure occurs, so that after the network device receives the SL consistent LBT failure report, the network device may promptly perform a recovery processing on the SL consistent LBT failure.

By implementing embodiments of the disclosure, when the terminal determines to trigger the reporting of the SL consistent LBT failure report, the terminal may quickly report the SL consistent LBT failure report to the network device through the uplink resource, so that the network device may promptly recover the SL consistent LBT failure, which may avoid the terminal from constantly triggering the connection reconstruction process, thereby improving the efficiency of data transmission.

It is noteworthy that different detection granularities of the SL consistent LBT failure in embodiments of the disclosure will result in different implementations for determining to report the SL consistent LBT failure report. In some embodiments of the disclosure, when the detection granularity of the SL consistent LBT failure is the resource pool granularity, the terminal determines that at least one resource pool triggers the SL consistent LBT failure, and the SL consistent LBT failure on the at least one resource pool has not been canceled, the terminal may determine to trigger the reporting of the SL consistent LBT failure report.

In some examples, in a case that the detection granularity of the SL consistent LBT failure is the resource pool granularity, the terminal determines that at least one resource pool triggers the SL consistent LBT failure, and there is no cancellation, the terminal may determine to trigger the reporting of the SL consistent LBT failure report. In an embodiment of the disclosure, in a case that the terminal determines to trigger the reporting of the SL consistent LBT failure report, the terminal may determine the uplink resource for transmitting the SL consistent LBT failure report and send the SL consistent LBT failure report to the network device on the uplink resource. Determining the uplink resource for transmitting the SL consistent LBT failure report in this embodiment may be implemented by any of methods described in various embodiments of the disclosure, which is not limited herein and will not be repeated.

In some embodiments of the disclosure, when the detection granularity of the SL consistent LBT failure is the RB set granularity, the terminal determines that at least one RB set triggers the SL consistent LBT failure, and the SL consistent LBT failure on the at least one RB set has not been canceled, the terminal may determine to trigger the reporting of the SL consistent LBT failure report.

In some examples, in a case that the detection granularity of the SL consistent LBT failure is the RB set granularity, the terminal determines that at least one RB set triggers the SL consistent LBT failure, and there is no cancellation, the terminal may determine to trigger the reporting of the SL consistent LBT failure report. In an embodiment of the disclosure, when the terminal determines to trigger the reporting of the SL consistent LBT failure report, the terminal may determine the uplink resource for transmitting the SL consistent LBT failure report, and send the SL consistent LBT failure report to the network device on the uplink resource. Determining the uplink resource for transmitting the SL consistent LBT failure report in this embodiment may be implemented in any of embodiments of the disclosure, which is not limited herein and will not be repeated.

In some embodiments of the disclosure, when the detection granularity of the SL consistent LBT failure is the BWP granularity, the terminal determines that at least one BWP or cell triggers the SL consistent LBT failure, and the SL consistent LBT failure on the at least one BWP or cell is not canceled, the terminal determines to trigger the reporting of the SL consistent LBT failure report.

In some examples, in a case that the detection granularity of the SL consistent LBT failure is the BWP granularity, the terminal determines that at least one BWP/cell (in which only one activated BWP is supported on one cell) triggers the SL consistent LBT failure, and there is no cancellation, the terminal may determine to trigger the reporting of SL continuous LBT failure report. In an embodiment of the disclosure, in a case that the terminal determines to trigger the reporting of the SL consistent LBT failure report, the terminal may determine the uplink resource for transmitting the SL consistent LBT failure report and send the SL consistent LBT failure report to the network device on the uplink resource. Determining the uplink resource for transmitting the SL consistent LBT failure report in this embodiment may be implemented in any of the embodiments of the disclosure, which is not limited herein and will not be repeated.

It is noteworthy that in embodiments of the disclosure, the SL consistent LBT failure report may be sent through the uplink resource used for the new transmission on the terminal. FIG. 3 is a flowchart illustrating a method for reporting a failure report according to an embodiment of the disclosure. It is noteworthy that the method may be performed by the terminal. As illustrated in FIG. 3, the method may include, but is not limited to, the following.

At block 301, it is determined to trigger a reporting of an SL consistent LBT failure report.

In embodiments of the disclosure, the implementation of block 301 may be any of implementations in embodiments of the disclosure, which is not limited here and will not be described in detail.

At block 302, it is determined that there is an uplink resource, for the terminal, used for a new transmission, in which the uplink resource used for the new transmission is able to accommodate the SL consistent LBT failure report and a subheader of the SL consistent LBT failure report.

In some examples, when determining to trigger the reporting of the SL consistent LBT failure report, the terminal may determine whether there is an uplink resource used by the terminal for the new transmission and whether the uplink resource used for the new transmission may accommodate the SL consistent LBT failure report and the subheader of the SL consistent LBT failure report. In a case that there is the uplink resource used for the new transmission and the uplink resource used for the new transmission is able to accommodate the SL consistent LBT failure report and the subheader of the SL consistent LBT failure report, the terminal may instruct to multiplex and assemble entities to generate the SL consistent LBT failure report.

At block 303, the uplink resource used for the new transmission is determined as the uplink resource for transmitting the SL consistent LBT failure report.

In other words, in a case that the terminal determines that there is the uplink resource used for the new transmission and that the uplink resource used for the new transmission is able to accommodate the SL consistent LBT failure report and the subheader of the SL consistent LBT failure report, the terminal may determine the uplink resource as the uplink resource for transmitting the SL consistent LBT failure report.

At block 304, the SL consistent LBT failure report is sent to the network device on the uplink resource.

In embodiments of the disclosure, the implementation of the block 304 may be any of implementations in embodiments of the disclosure, which is not limited here and will not be described in detail.

By implementing embodiments of the disclosure, when the terminal determines that there is the uplink resource used for the new transmission and the uplink resource used for the new transmission is able to accommodate the SL consistent LBT failure report and the subheader of the SL consistent LBT failure report, the SL consistent LBT failure report may be quickly reported to the network device through the uplink resource used for the new transmission, so that the network device may recover the SL consistent LBT failure in time, which may avoid the terminal from constantly triggering the connection reconstruction process, thereby improving the efficiency of data transmission.

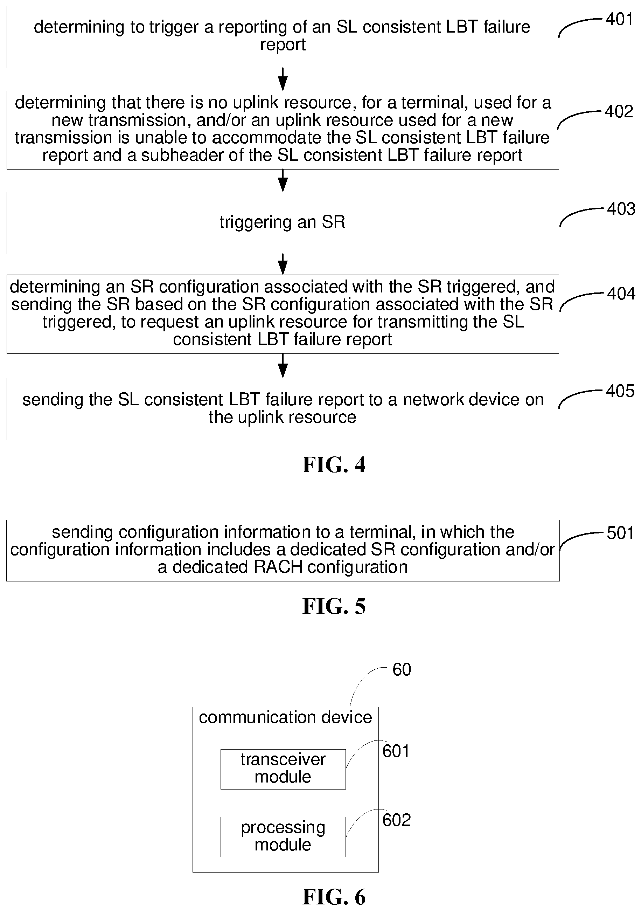

It is noteworthy that, when there is no uplink resource, on the terminal, used for the new transmission, the terminal according to embodiments of the disclosure triggers the SR, requests the uplink resource through the SR configuration associated with the triggered SR, and sends the SL consistent LBT failure report through the uplink resource. FIG. 4 is a flowchart illustrating a method for reporting a failure report according to an embodiment of the disclosure. It is noteworthy that the method may be performed by the terminal. As illustrated in FIG. 4, the method may include, but is not limited to, the following.

At block 401, it is determined to trigger a reporting of an SL consistent LBT failure report.

In the embodiments of the disclosure, the implementation of the block 401 may be any of implementations in the embodiments of the disclosure, which is not limited here and will not be described in detail.

At block 402, it is determined that there is no uplink resource, for the terminal, used for a new transmission, and/or that an uplink resource used for a new transmission is unable to accommodate an SL consistent LBT failure report and a subheader of the SL consistent LBT failure report.

In some examples, when the terminal determines to trigger the reporting of the SL consistent LBT failure report, the terminal may determine whether the terminal has the uplink resource used for the new transmission and whether the uplink resource used for the new transmission is able to accommodate the SL consistent LBT failure report and the subheader of the SL consistent LBT failure report. In a case that there is no uplink resource used for the new transmission and/or the uplink resource used for the new transmission is unable to accommodate the SL consistent LBT failure report and/or the subheader of the SL consistent LBT failure report, the terminal performs a block 403, that is, the terminal triggers a Scheduling Request (SR).

At block 403, an SR is triggered.

At block 404, an SR configuration associated with the SR triggered is determined, and the SR is sent through the SR configuration associated with the SR triggered to request the uplink resource for transmitting the SL consistent LBT failure report.

In a possible embodiment, the SR configuration associated with the SR triggered may include, but is not limited to, any one of the following:
a dedicated SR configuration, in which the dedicated SR configuration may be an SR configuration dedicated to an SL consistent LBT failure recovery;
any available SR configuration; or
an SR configuration arriving earliest among at least one available SR configuration.

In an embodiment of the disclosure, when the terminal determines that there is no uplink resource used for the new transmission and/or that the uplink resource used for the new transmission is unable to accommodate the SL consistent LBT failure report and the subheader of the SL consistent LBT failure report, the terminal triggers the SR and uses the dedicated SR configuration as the corresponding configuration of the SR triggered. That is, the SR is sent through the dedicated SR configuration to request the uplink resource for transmitting the SL consistent LBT failure report.

In an embodiment of the disclosure, when the terminal determines that there is no uplink resource used for the new transmission and/or that the uplink resource used for the new transmission is unable to accommodate the SL consistent LBT failure report and the subheader of the SL consistent LBT failure report, the terminal triggers the SR and uses any available SR configuration as the corresponding configuration of the SR triggered. That is, the terminal sends the SR through any available SR configuration to request the uplink resource for transmitting the SL consistent LBT failure report.

In an embodiment of the disclosure, when the terminal determines that there is no uplink resource used for the new transmission and/or that the uplink resource used for the new transmission is unable to accommodate the SL consistent LBT failure report and the subheader of the SL consistent LBT failure report, the terminal triggers the SR and uses the SR configuration of an SR resource arriving earliest among available SR configurations as the corresponding configuration of the SR triggered. That is, the SR is sent through the SR configuration of the SR resource arriving earliest among the available SR configurations to request the uplink resource for transmitting the SL consistent LBT failure report.

In an embodiment of the disclosure, one dedicated SR configuration may be defined, and the dedicated SR configuration is used exclusively for the SL consistent LBT failure recovery. In a possible implementation, the dedicated SR configuration may be indicated by a parameter, and the parameter may be sl-LBT-schedulingRequestID. The scheduling request identifier (such as SchedulingRequestId) associated with the sl-LBT-schedulingRequestID is used for indicating the SR configuration dedicated to the SL consistent LBT failure recovery. There may be other implementations, which are not limited in this embodiment.

In one possible implementation, the dedicated SR configuration is a configuration per terminal (or per UE). In some examples, the dedicated SR configuration may be carried in the SL-PHY-MAC-RLC-Config configuration. There may be other implementations, which are not limited in this embodiment. It is noteworthy that in the embodiments of the disclosure, the dedicated SR configuration may be configured by a network device to the terminal or pre-configured to the terminal.

In a possible implementation, the dedicated SR configuration may include a set of Physical Uplink Control Channel (PUCCH) resources, which may be distributed on different BWPs and cells. On one BWP, at most one PUCCH resource is configured for the dedicated SR configuration.

At block 405, the SL consistent LBT failure report is sent to the network device on the uplink resource.

In the embodiments of the disclosure, the implementation of the block 405 may be any of implementations in the embodiments of the disclosure, which is not limited here and will not be described in detail.

By implementing embodiments of the disclosure, the SR may be triggered by the terminal, and the uplink resource may be requested through the SR configuration associated with the triggered SR. The SL consistent LBT failure report may be quickly reported to the network device through the uplink resource, so that the network device may recover the SL consistent LBT failure in time, which may avoid the terminal from constantly triggering the connection reconstruction process, thereby improving the efficiency of data transmission.

The disclosure provides a method for reporting a failure report. The method may be performed by a terminal. The method may include, but is not limited to, the following.

At block 401a, it is determined to trigger a reporting of an SL consistent LBT failure report.

In the embodiments of the disclosure, the implementation of the block 401a may be any of implementations in the embodiments of the disclosure, which is not limited here and will not be described in detail.

At block 402a, an SR is triggered.

At block 403a, a dedicated SR configuration is determined, and the SR is sent through the dedicated SR configuration to request an uplink resource for transmitting the SL consistent LBT failure report.

In one implementation, the terminal uses the dedicated SR configuration as a corresponding configuration of the SR triggered, and sends the SR through the dedicated SR configuration to request the uplink resource for transmitting the SL consistent LBT failure report.

In an embodiment of the disclosure, a dedicated SR configuration may be defined, and the dedicated SR configuration is used exclusively for the SL consistent LBT failure recovery. In a possible implementation, the dedicated SR configuration may be indicated by a parameter, and the parameter may be sl-LBT-schedulingRequestID. The scheduling request identifier (SchedulingRequestId) associated with the sl-LBT-schedulingRequestID is used for indicating the SR configuration dedicated to the SL consistent LBT failure recovery. There may be other implementations, which are not limited in this embodiment.

In one possible implementation, the dedicated SR configuration is a configuration per terminal (per UE). In some examples, the dedicated SR configuration may be carried in the SL-PHY-MAC-RLC-Config configuration. There may be other implementations, which are not limited in this embodiment. It is noteworthy that in the embodiments of the disclosure, the dedicated SR configuration may be configured by a network device to the terminal or pre-configured to the terminal.

In a possible implementation, the dedicated SR configuration may include a set of Physical Uplink Control Channel (PUCCH) resources, and these PUCCH resources may be distributed on different BWPs and cells. On one BWP, at most one PUCCH resource is configured for the dedicated SR configuration.

At block 404a, the SL consistent LBT failure report is sent to the network device on the uplink resource.

In the embodiments of the disclosure, the implementation of the block 404a may be any of implementations in the embodiments of the disclosure, which is not limited here and will not be described in detail.

By implementing embodiments of the disclosure, the SR may be triggered by the terminal, and the uplink resource may be requested through the dedicated SR configuration. The SL consistent LBT failure report may be quickly reported to the network device through the uplink resource, so that the network device may recover the SL consistent LBT failure in time, which avoids the terminal from constantly triggering the connection reconstruction process, thereby improving the efficiency of data transmission.

In some embodiments of the disclosure, there is no SR configuration is associated with the SR triggered by the terminal, a random access (RACH) may be triggered, and an RACH may be initiated based on a dedicated RACH resource to request the uplink resource for transmitting the SL consistent LBT failure report, in which the dedicated RACH resource is an RACH resource dedicated to the SL consistent LBT failure recovery.

In one possible implementation, the terminal determines to trigger the reporting of the SL continuous LBT failure report. In a case that there is an uplink resource used for the new transmission and the uplink resource is able to accommodate the SL consistent LBT failure report and the subheader of the SL consistent LBT failure report, the terminal instructs to multiplex and assemble entities to generate the SL consistent LBT failure report; otherwise, the terminal triggers the SR. The terminal triggers the SR. In a case that there is no dedicated SR configuration, or in a case that there is no available SR configuration (for example, the terminal has no SR configuration), the terminal triggers the RACH, initiates the RACH through the dedicated RACH resource, and requests the uplink resource to send the SL consistent LBT failure report.

In a possible implementation, the disclosure may define the dedicated RACH resource, and the terminal may request the uplink resource through the dedicated RACH resource to send the SL consistent LBT failure report.

In a possible implementation, a new parameter, such as sl-LBT-rachconfig, may be defined. The sl-LBT-rachconfig may carry the dedicated RACH resource used for the SL consistent LBT failure recovery. There may be other implementations, which are not limited in this embodiment.

In one possible implementation, the dedicated RACH resource may be a configuration per terminal (per UE). In some examples, the dedicated RACH resource may be carried in the SL-PHY-MAC-RLC-Config configuration. There may be other implementations, which are not limited in this embodiment. It is noteworthy that in the embodiments of the disclosure, the dedicated RACH resource may be configured by a network device to the terminal or may be pre-configured to the terminal.

The disclosure provides a method for reporting a failure report. The method may be performed by a terminal. The method may include, but is not limited to, the following.

At block 401a, it is determined to trigger a reporting of an SL consistent LBT failure report.

In the embodiments of the disclosure, the implementation of the block 401a may be any of implementations in the embodiments of the disclosure, which is not limited here and will not be described in detail.

At block 402a, an SR is triggered.

At block 403a, a dedicated SR configuration is determined, and the SR is sent through the dedicated SR configuration to request an uplink resource for transmitting the SL consistent LBT failure report.

In one implementation, the terminal uses the dedicated SR configuration as a corresponding configuration of the SR triggered and sends the SR through the dedicated SR configuration to request the uplink resource for transmitting the SL consistent LBT failure report.

In an embodiment of the disclosure, a dedicated SR configuration may be defined, and the dedicated SR configuration is used exclusively for the SL consistent LBT failure recovery. In a possible implementation, the dedicated SR configuration may be indicated by a parameter, and the parameter may be sl-LBT-schedulingRequestID. The scheduling request identifier (such as SchedulingRequestId) associated with the sl-LBT-schedulingRequestID is used for indicating the SR configuration dedicated to the SL consistent LBT failure recovery. There may be other implementations, which are not limited in this embodiment.

In one possible implementation, the dedicated SR configuration is a configuration per terminal (per UE). In some examples, the dedicated SR configuration may be carried in the SL-PHY-MAC-RLC-Config configuration. There may be other implementations, which are not limited in this embodiment. It is noteworthy that in the embodiments of the disclosure, the dedicated SR configuration may be configured by a network device to the terminal or pre-configured to the terminal.

In a possible implementation, the dedicated SR configuration may include a set of Physical Uplink Control Channel (PUCCH) resources, and these PUCCH resources may be distributed on different BWPs and cells. On one BWP, at most one PUCCH resource is configured for the dedicated SR configuration.

At block 404a, the SL consistent LBT failure report is sent to the network device on the uplink resource.

In the embodiments of the disclosure, the implementation of the block 404a may be any of implementations in the embodiments of the disclosure, which is not limited here and will not be described in detail.

By implementing embodiments of the disclosure, the SR may be triggered by the terminal, and uplink resource may be requested through the dedicated SR configuration. The SL consistent LBT failure report may be quickly reported to the network device through the uplink resource, so that the network device may recover the SL consistent LBT failure in time, which avoids the terminal from constantly triggering the connection reconstruction process, thereby improving the efficiency of data transmission.

The disclosure provides a method for reporting a failure report. The method may be performed by a terminal. The method may include, but is not limited to, the following.

At block 401b, it is determined to trigger a reporting of an SL consistent LBT failure report.

In the embodiments of the disclosure, the implementation of the block 401b may be any of implementations in the embodiments of the disclosure, which is not limited here and will not be described in detail.

At block 402b, an SR is triggered.

At block 403b, any available SR configuration is determined, and the SR is sent through the determined available SR configuration to request an uplink resource for transmitting the SL consistent LBT failure report.

In one implementation, the terminal uses any available SR configuration as the corresponding configuration of the SR triggered, and sends the SR through the available SR configuration to request the uplink resource for transmitting the SL consistent LBT failure report.

At block 404b, the SL consistent LBT failure report is sent to the network device on the uplink resource.

In the embodiments of the disclosure, the implementation of the block 404b may be any of implementations in the embodiments of the disclosure, which is not limited here and will not be described in detail.

By implementing embodiments of the disclosure, the SR may be triggered by the terminal, and the uplink resource may be requested through any available SR configuration. The SL consistent LBT failure report may be quickly reported to the network device through the uplink resource, so that the network device may recover the SL consistent LBT failure in time, which may avoid the terminal from constantly triggering the connection reconstruction process, thereby improving the efficiency of data transmission.

The disclosure provides a method for reporting a failure report. The method may be performed by a terminal. The method may include, but is not limited to, the following.

At block 401c, it is determined to trigger a reporting of an SL consistent LBT failure report.

In the embodiments of the disclosure, the implementation of the block 401c may be any of implementations in the embodiments of the disclosure, which is not limited here and will not be described in detail.

At block 402c, an SR is triggered.

At block 403c, an SR configuration arriving earliest is determined among at least one available SR configuration, and the SR is sent through the SR configuration arriving earliest determined among the at least one available SR configuration to request an uplink resource for transmitting an SL consistent LBT failure report.

In one implementation, the terminal uses the SR configuration of the SR resource arriving earliest among the available SR configurations as the corresponding configuration of the triggered SR, and sends the SR through the SR configuration of the SR resource arriving earliest among the available SR configurations to request the uplink resource for transmitting the SL consistent LBT failure report.

At block 404c, the SL consistent LBT failure report is sent to the network device on the uplink resource.

In the embodiments of the disclosure, the implementation of the 404c may be any of implementations in the embodiments of the disclosure, which is not limited here and will not be described in detail.

By implementing embodiments of the disclosure, the SR may be triggered by the terminal, and the uplink resource may be requested through the SR configuration of the SR resource arriving earliest among the available SR configurations. The SL consistent LBT failure report may be quickly reported to the network device through the uplink resource, so that the network device may recover the SL consistent LBT failure in time, which may avoid the terminal from constantly triggering the connection reconstruction process, thereby improving the efficiency of data transmission.

It is understandable that the above embodiments describe the implementations of the methods for reporting a failure report according to the embodiments of the disclosure from the terminal side. The embodiments of the disclosure also provide a method for reporting a failure report, and the implementation of the method for reporting a failure report will be described from the network device side. FIG. 5 is a flowchart of another method for reporting a failure report according to embodiments of the disclosure. It is noteworthy that the method may be performed by a network device. As illustrated in FIG. 5, the method may include, but is not limited to, the following.

At block 501, configuration information is sent to a terminal. The configuration information may include a dedicated SR configuration and/or a dedicated RACH configuration.

In embodiments of the disclosure, the dedicated SR configuration and/or the dedicated RACH configuration may be used to assist the terminal in requesting an uplink resource from the network device, the uplink resource being used for transmitting an SL consistent LBT failure report.

In embodiments of the disclosure, one dedicated SR configuration may be defined and the dedicated SR configuration is used exclusively for an SL consistent LBT failure recovery. In a possible implementation, the dedicated SR configuration may be represented by a parameter, and the parameter may be sl-LBT-schedulingRequestID. The scheduling request identifier (SchedulingRequestId) associated with the sl-LBT-schedulingRequestID is used for indicating the SR configuration dedicated to SL consistent LBT failure recovery.

In a possible implementation, the dedicated SR configuration is a configuration per terminal (per UE). In some examples, the dedicated SR configuration may be carried in the SL-PHY-MAC-RLC-Config configuration. There may be other implementations, which are not limited in this embodiment.

In a possible implementation, the dedicated SR configuration may include a set of PUCCH resources. The PUCCH resources may be distributed on different BWPs and cells. On one BWP, at most one PUCCH resource is configured for the dedicated SR configuration.

In a possible implementation, the disclosure may define the dedicated RACH resource, and the terminal may request the uplink resource through the dedicated RACH resource to send the SL consistent LBT failure report.

In a possible implementation, a new parameter, such as sl-LBT-rachconfig, may be defined, and the sl-LBT-rachconfig may carry the dedicated RACH resource used for the SL consistent LBT failure recovery. There may be other implementations, which are not limited in this embodiment.

In a possible implementation, the dedicated RACH resource may be a configuration per terminal (per UE). In some examples, the dedicated RACH resource may be carried in the SL-PHY-MAC-RLC-Config configuration. There may be other implementations, which are not limited in this embodiment.

By implementing embodiments of the disclosure, the dedicated SR configuration and/or the dedicated RACH configuration may be configured for the terminal by the network device. Therefore, the terminal may request the uplink resource through the dedicated SR configuration and/or the dedicated RACH configuration, and the terminal may quickly report the SL consistent LBT failure report to the network device through the uplink resource, so that the network device may promptly recover the SL consistent LBT failure, which may avoid the terminal from constantly triggering the connection reconstruction process, thereby improving the efficiency of data transmission.

In the above embodiments according to the disclosure, the methods according to the embodiments of the disclosure are introduced from the perspectives of the terminal and the network device, respectively. In order to implement the functions in the methods according to the above embodiments of the disclosure, the terminal and the network device may include hardware structures and software modules, and the above functions may be implemented in the form of hardware structures, software modules, or hardware structures plus software modules. One of the above functions may be executed in the form of hardware structures, software modules, or hardware structures plus software modules.

FIG. 6 Is a schematic diagram illustrating a communication device 60 according to an embodiment of the disclosure. The communication device 60 illustrated in FIG. 6 may include a transceiver module 601 and a processing module 602. The transceiver module 601 may include a sending module and/or a receiving module. The sending module is configured to implement a sending function, the receiving module is configured to implement a receiving function, and the transceiver module 601 may implement the sending function and/or the receiving function.

The communication device 60 may be a terminal, a device in a terminal, or a device that may be used in conjunction with a terminal. Or, the communication device 60 may be a network device, a device in a network device, or a device that may be used in conjunction with a network device.

The communication device 60 is a terminal. The processing module 602 is configured to determine to trigger a reporting of an SL consistent LBT failure report and to determine an uplink resource for transmitting the SL consistent LBT failure report. The transceiver module 601 is configured to send the SL consistent LBT failure report to the network device on the uplink resource.

In one implementation, the processing module 602 is configured to determine, by the terminal, to trigger the reporting of the SL consistent LBT failure report, in a case that a detection granularity of an SL consistent LBT failure is a resource pool granularity, the terminal determines that at least one resource pool triggers the SL consistent LBT failure, and the SL consistent LBT failure on the at least one resource pool is not canceled.

In another implementation, the processing module 602 is configured to determine, by the terminal, to trigger the reporting of the SL consistent LBT failure report, in a case that a detection granularity of an SL consistent LBT failure is a RB set granularity, the terminal determines that at least one RB set triggers the SL consistent LBT failure, and the SL consistent LBT failure on the at least one RB set is not canceled.

In another implementation, the processing module 602 is configured to determine, by the terminal, to trigger the reporting of the SL consistent LBT failure report, in a case that a detection granularity of an SL consistent LBT failure is a BWP granularity, the terminal determines that at least one BWP or cell triggers the SL consistent LBT failure, and the SL consistent LBT failure on the at least one BWP or cell is not canceled.

In one implementation, the processing module 602 is configured to determine that there is an uplink resource, for the terminal, used for a new transmission, in which the uplink resource used for the new transmission is able to accommodate the SL consistent LBT failure report and a subheader of the SL consistent LBT failure report; and determine the uplink resource used for the new transmission as the uplink resource for transmitting the SL consistent LBT failure report.

In another implementation, the processing module 602 is configured to determine that there is no uplink resource, for the terminal, used for a new transmission, and/or that the uplink resource used for the new transmission is unable to accommodate the SL consistent LBT failure report and a subheader of the SL consistent LBT failure report; trigger an SR; determine an SR configuration associated with the SR triggered; and send the SR based on the SR configuration associated with the SR triggered to request the uplink resource for transmitting the SL consistent LBT failure report.

In a possible implementation, the SR configuration associated with the SR triggered includes any one of: a dedicated SR configuration, in which the dedicated SR configuration is an SR configuration dedicated to an SL consistent LBT failure recovery; any available SR configuration; or an SR configuration arriving earliest among at least one available SR configuration.

In a possible implementation, the processing module 602 is configured to: determine that no SR configuration is associated with the SR triggered; trigger an RACH; initiate the RACH based on a dedicated RACH resource to request the uplink resource for transmitting the SL consistent LBT failure report; in which the dedicated RACH resource is an RACH resource dedicated to an SL consistent LBT failure recovery.

The communication device 60 is a network device. The transceiver module 601 is configured to send configuration information to a terminal, in which the configuration information includes a dedicated SR configuration and/or a dedicated RACH configuration. The dedicated SR configuration and/or the dedicated RACH configuration is used to assist the terminal in requesting an uplink resource from the network device, the uplink resource being used to transmit an SL consistent LBT failure report.

Regarding the devices in the above embodiments, the specific manner in which each module performs operations has been described in detail in the embodiments of the methods, and will not be elaborated here.

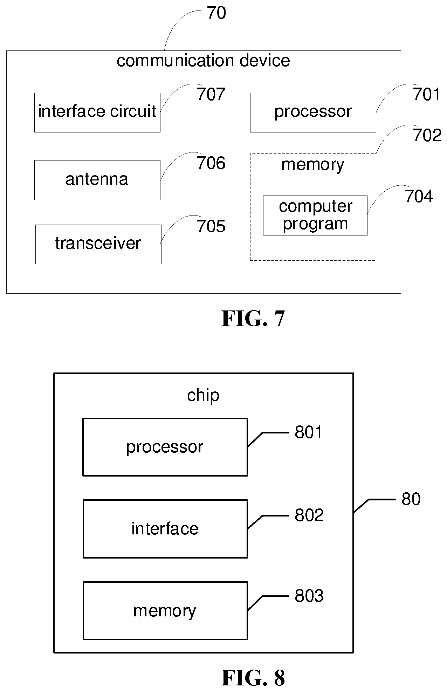

FIG. 7 is a schematic diagram illustrating another communication device 70 according to an embodiment of the disclosure. As illustrated in FIG. 7, the communication device 70 may be a network device or a terminal. Or, the communication device 70 may be a chip, a chip system, or a processor that supports the network device to implement the above methods. Or, the communication device 70 may be a chip, a chip system, or a processor that supports the terminal to implement the above methods. The device may be configured to implement the methods described in the above method embodiments, and for the details reference may be made to the description in the above method embodiments.

The communication device 70 may include one or more processors 701. The processor 701 may be a general-purpose processor or a dedicated processor. For example, the processor 701 may be a baseband processor or a central processing unit. The baseband processor may be configured to process the communication protocol and communication data, and the central processing unit may be configured to control the communication device (such as a base station, a baseband chip, a terminal, a terminal chip, a DU, a CU, etc.), to perform a computer program, and to process the data of the computer program.

In some examples, the communication device 70 may further include one or more memories 702, on which a computer program 704 may be stored. The processor 701 may execute the computer program 704 to enable the communication device 70 to perform the methods described in the above method embodiments. In some examples, data may also be stored in the memory 702. The communication device 70 and the memory 702 may be provided separately or integrated together.

In some examples, the communication device 70 may further include a transceiver 705 and an antenna 706. The transceiver 705 may be referred to as a transceiver unit, a transceiver machine, or a transceiver circuit, for implementing a transceiver function. The transceiver 705 may include a receiver and a transmitter. The receiver may be referred to as a receiver machine or a receiving circuit, for implementing a receiving function. The transmitter may be referred to as a transmitter machine or a transmitting circuit, for implementing a transmitting function.

In some examples, the communication device 70 may further include one or more interface circuits 707. The interface circuit 707 is configured to receive code instructions and transmit the code instructions to the processor 701. The processor 701 runs the code instructions to enable the communication device 70 to perform the methods described in the above method embodiments.

The communication device 70 is a terminal. The processor 701 is configured to perform the block 201 in FIG. 2, blocks 301, 302 and 303 in FIG. 3, or blocks 401, 402, 403 and 404 in FIG. 4. The transceiver 705 is configured to perform the block 202 in FIG. 2, the block 304 in FIG. 3, or the block 405 in FIG. 4.

The communication device 70 is a network device. The transceiver 705 is configured to perform the block 501 in FIG. 5.

In one implementation, the processor 701 may include a transceiver for implementing the receiving and sending functions. For example, the transceiver may be a transceiver circuit, an interface, or an interface circuit. The transceiver circuit, interface, or interface circuit for implementing the receiving and sending functions may be separate or integrated. The above-mentioned transceiver circuit, interface, or interface circuit may be configured to read and write code/data, or the above-mentioned transceiver circuit, interface, or interface circuit may be configured to transmit or deliver signals.

In one implementation, the processor 701 may store a computer program, which runs on the processor 701 and enables the communication device 70 to perform the methods described in the above method embodiments. The computer program may be fixed in the processor 701, in which case the processor 701 may be implemented by hardware.

In one implementation, the communication device 70 may include a circuit that may implement the functions of sending or receiving or communicating in the aforementioned method embodiments. The processor and transceiver described in the disclosure may be implemented in an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal, but the scope of the communication device described in the disclosure is not limited thereto, and the structure of the communication device may not be limited by FIG. 7. The communication device may be an independent device or may be part of a larger device. For example, the communication device may be:
(1) An independent integrated circuit (IC), a chip, a chip system or a subsystem;
(2) A set of one or more ICs, and in some examples, the set may also include a storage component for storing data and computer programs;
(3) An ASIC, such as modem;
(4) A module that may be embedded in other devices;
(5) A receiver, a terminal, an intelligent terminal, a cellular phone, a wireless device, a handheld device, a mobile unit, a vehicle-mounted device, a network device, a cloud device, an artificial intelligence device, etc.;
(6) Others.

For the case where the communication device is a chip or a chip system, the schematic diagram of the chip structure is illustrated in FIG. 8. The chip illustrated in FIG. 8 includes a processor 801 and an interface 802. The number of processors 801 may be one or more, and the number of interfaces 802 may be multiple.

For the case where the chip is configured to implement the functions of the terminal in the embodiments of the disclosure:

The processor 801 is configured to determine to trigger a reporting of an SL consistent LBT failure report and determine an uplink resource for transmitting the SL consistent LBT failure report. The interface 802 is configured to send the SL consistent LBT failure report to the network device on the uplink resource.

In one implementation, the processor 801 is configured to determine, by the terminal, to trigger the reporting of the SL consistent LBT failure report, in a case that a detection granularity of an SL consistent LBT failure is a resource pool granularity, the terminal determines that at least one resource pool triggers the SL consistent LBT failure, and the SL consistent LBT failure on the at least one resource pool is not canceled.

In another implementation, the processor 801 is configured to determine, by the terminal, to trigger the reporting of the SL consistent LBT failure report, in a case that a detection granularity of an SL consistent LBT failure is an RB set granularity, the terminal determines that at least one RB set triggers the SL consistent LBT failure, and the SL consistent LBT failure on the at least one RB set is not canceled.

In still another implementation, the processor 801 is configured to determine, by the terminal, to trigger the reporting of the SL consistent LBT failure report, in a case that a detection granularity of an SL consistent LBT failure is a BWP granularity, the terminal determines that at least one BWP or cell triggers the SL consistent LBT failure, and the SL consistent LBT failure on the at least one BWP or cell is not canceled.

In one implementation, the processor 801 is configured to determine that there is an uplink resource, for the terminal, used for a new transmission, in which the uplink resource used for the new transmission is able to accommodate the SL consistent LBT failure report and a subheader of the SL consistent LBT failure report; and to determine the uplink resource used for the new transmission as the uplink resource for transmitting the SL consistent LBT failure report.

In another implementation, the processor 801 is configured to determine that there is no uplink resource, for the terminal, used for a new transmission, and/or that the uplink resource used for the new transmission is unable to accommodate an SL consistent LBT failure report and a subheader of the SL consistent LBT failure report; to trigger an SR; to determine an SR configuration associated with the SR triggered, and to send the SR based on the SR configuration associated with the SR triggered to request the uplink resource for transmitting the SL consistent LBT failure report.

In a possible implementation, the SR configuration associated with the SR triggered includes any one of the following: a dedicated SR configuration, in which the dedicated SR configuration is an SR configuration dedicated to an SL consistent LBT failure recovery; any available SR configuration; or an SR configuration arriving earliest among at least one available SR configuration.

In one possible implementation, the processor 801 is configured to determine that no SR configuration is associated with the SR triggered; to trigger an RACH; and to initiate the RACH based on a dedicated RACH resource to request the uplink resource for transmitting the SL consistent LBT failure report; in which the dedicated RACH resource is an RACH resource dedicated to an SL consistent LBT failure recovery.

For the case where the chip is configured to implement the functions of the network device in the embodiments of the disclosure:
The interface 802 is configured to send configuration information to the terminal, in which the configuration information includes a dedicated SR configuration and/or a dedicated RACH configuration; the dedicated SR configuration and/or the dedicated RACH configuration is used to assist the terminal in requesting an uplink resource from the network device, and the uplink resource is used for transmitting an SL consistent LBT failure report.

In some examples, the chip further includes a memory 803. The memory 803 is configured to store necessary computer programs and data.

Those skilled in the art may also understand that the various illustrative logical blocks and steps listed in the embodiments of the disclosure may be implemented by electronic hardware, computer software, or a combination of the two. Whether such functions are implemented by hardware or software depends on the specific application and the design requirements of the entire system. Those skilled in the art may use various methods to implement the functions described for each specific application, but such implementation should not be understood as exceeding the scope of protection of the embodiments of the disclosure.

Embodiments of the disclosure also provide a system for reporting a failure report. The system includes the communication device as a terminal and the communication device as a network device in the aforementioned embodiments of FIG. 6, or the communication device as a terminal and the communication device as a network device in the aforementioned embodiments of FIG. 7.

The disclosure also provides a readable storage medium having instructions stored thereon, which implement the functions of any of the above method embodiments when executed by a computer.

The disclosure also provides a computer program product, which implements the functions of any of the above method embodiments when executed by a computer.

The above embodiments may be implemented in whole or in part by software, hardware, firmware or any combination thereof. When implemented using software, the embodiments may be implemented in whole or in part in the form of a computer program product. The computer program product includes one or more computer programs. When the computer program is loaded and executed on a computer, the process or function described in the embodiments of the disclosure is generated in whole or in part. The computer may be a general-purpose computer, a special-purpose computer, a computer network, or other programmable device. The computer program may be stored in a computer-readable storage medium, or transmitted from one computer-readable storage medium to another computer-readable storage medium. For example, the computer program may be transmitted from a website site, computer, server or data center by a wired (e.g., coaxial cable, optical fiber, digital subscriber line (DSL), etc.) or wireless (e.g., infrared, wireless, microwave, etc.) manner to another website site, computer, server or data center. The computer-readable storage medium may be any available medium that a computer may access or a data storage device such as a server or data center that includes one or more available media integrated. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

Those skilled in the art may understand that various numerical numbers, such as "first" and "second", involved in the disclosure are only for the convenience of description and are not used to limit the scope of the embodiments of the disclosure, and also indicate the order of precedence.

The term "at least one" in the disclosure may also be described as "one or more", and the term "a plurality of" may be two, three, four or more, which is not limited in the disclosure. In the embodiments of the disclosure, for the same kind of technical features, these technical features are distinguished by "first," "second," "third," "A," "B," "C," "D," etc., and there is no order of precedence or size between the technical features described by the "first," "second," "third," "A," "B," "C" and "D".

The corresponding relationships shown in the tables in the disclosure may be configured or predefined. Values of the information in each table are only examples and may be configured as other values, which are not limited in the disclosure. When configuring the corresponding relationship between the information and each parameter, it is not necessarily required to configure all the corresponding relationships illustrated in each table. For example, in the table of the disclosure, the corresponding relationships shown in some rows may not be configured. As another example, appropriate modifications and adjustments may be made based on the above table, such as splitting, merging, etc. Names of the parameters shown in titles of the above table may also use other names that may be understood by the communication device, and values or representations of the parameters may also be other values or representations that may be understood by the communication device. When implementing the above table, other data structures may also be used, such as arrays, queues, containers, stacks, linear lists, pointers, linked lists, trees, graphs, structures, classes, heaps, or hash tables.

The term "predefined" in the disclosure may be understood as defined, defined in advance, stored, pre-stored, pre-negotiated, pre-configured, solidified, or pre-burned.

Those skilled in the art will appreciate that the units and algorithm steps of each example described in conjunction with the embodiments of the disclosure may be implemented in electronic hardware, or a combination of computer software and electronic hardware. Whether these functions are performed in hardware or software depends on the specific application and design constraints of the technical solution. Professional and technical personnel may use different methods to implement the described functions for each specific application, but such implementation should not be considered to be beyond the scope of the disclosure.

Those skilled in the art may clearly understand that, for the convenience and brevity of description, the specific working processes of the systems, devices and units described above may refer to the corresponding processes in the aforementioned method embodiments and will not be repeated here.

The above is only specific embodiments of the disclosure, but the protection scope of the disclosure is not limited thereto. Any person skilled in the art who is familiar with the technical field may easily think of changes or substitutions within the technical scope of the disclosure, which should be included in the protection scope of the disclosure. Therefore, the protection scope of the disclosure should be based on the protection scope of appending claims.

## Claims

1. A method for reporting a failure report, performed by a terminal, the method comprising:
determining to trigger a reporting of a sidelink (SL) consistent listen before talk (LBT) failure report, and determining an uplink resource for transmitting the SL consistent LBT failure report; and
sending, to a network device, the SL consistent LBT failure report on the uplink resource.

2. The method of claim 1, wherein determining to trigger the reporting of the SL consistent LBT failure report comprises:
determining, by the terminal, to trigger the reporting of the SL consistent LBT failure report, in a case that a detection granularity of an SL consistent LBT failure is a resource pool granularity, the terminal determines that at least one resource pool triggers the SL consistent LBT failure, and the SL consistent LBT failure on the at least one resource pool is not canceled.

3. The method of claim 1, wherein determining to trigger the reporting of the SL consistent LBT failure report comprises:
determining, by the terminal, to trigger the reporting of the SL consistent LBT failure report, in a case that a detection granularity of an SL consistent LBT failure is a resource block (RB) set granularity, the terminal determines that at least one RB set triggers the SL consistent LBT failure, and the SL consistent LBT failure on the at least one RB set is not canceled.

4. The method of claim 1, wherein determining to trigger the reporting of the SL consistent LBT failure report comprises:
determining, by the terminal, to trigger the reporting of the SL consistent LBT failure report, in a case that a detection granularity of an SL consistent LBT failure is a bandwidth part (BWP) granularity, the terminal determines that at least one BWP or cell triggers the SL consistent LBT failure, and the SL consistent LBT failure on the at least one BWP or cell is not canceled.

5. The method of claim 1, wherein determining the uplink resource for transmitting the SL consistent LBT failure report comprises:
determining that there is an uplink resource, for the terminal, used for a new transmission, wherein the uplink resource used for the new transmission is able to accommodate the SL consistent LBT failure report and a subheader of the SL consistent LBT failure report; and
determining the uplink resource used for the new transmission as the uplink resource for transmitting the SL consistent LBT failure report.

6. The method of claim 1, wherein determining the uplink resource for transmitting the SL consistent LBT failure report comprises:
determining that there is no uplink resource, for the terminal, used for a new transmission, and/or that an uplink resource used for a new transmission is unable to accommodate the SL consistent LBT failure report and a subheader of the SL consistent LBT failure report;
triggering a scheduling request (SR); and
determining an SR configuration associated with the SR triggered, and sending the SR based on the SR configuration to request the uplink resource for transmitting the SL consistent LBT failure report.

7. The method of claim 6, wherein the SR configuration associated with the SR triggered comprises any one of:
a dedicated SR configuration, wherein the dedicated SR configuration is an SR configuration dedicated to an SL continuous LBT failure recovery;
any available SR configuration; or
an SR configuration arriving earliest among at least one available SR configuration.

8. The method of claim 6, wherein determining the uplink resource for transmitting the SL consistent LBT failure report further comprises:
determining that no SR configuration is associated with the SR triggered; and
triggering a random access channel (RACH), initiating the RACH based on a dedicated RACH resource to request the uplink resource for transmitting the SL consistent LBT failure report; wherein the dedicated RACH resource is an RACH resource dedicated to an SL consistent LBT failure recovery.

9. A method for reporting a failure report, performed by a network device, the method comprising:
sending configuration information to a terminal, wherein the configuration information comprises a dedicated scheduling request (SR) configuration and/or a dedicated random access channel (RACH) configuration;
wherein the dedicated SR configuration and/or the dedicated RACH configuration is used to assist the terminal in requesting an uplink resource from the network device, the uplink resource being used for transmitting a sidelink (SL) consistent listen before talk (LBT) failure report.

10. A communication device, comprising:
a processing module, configured to determine to trigger a reporting of a sidelink (SL) consistent listen before talk (LBT) failure report and to determine an uplink resource for transmitting the SL consistent LBT failure report; and
a transceiver module, configured to send, to a network device, the SL consistent LBT failure report on the uplink resource.

11. A communication device, comprising:
a transceiver module, configured to send configuration information to a terminal, wherein the configuration information comprises a dedicated scheduling request (SR) configuration and/or a dedicated random access channel (RACH) configuration;
wherein the dedicated SR configuration and/or the dedicated RACH configuration is used to assist the terminal in requesting an uplink resource from the network device, the uplink resource being used for transmitting a sidelink (SL) consistent listen before talk (LBT) failure report.

12. A communication device, comprising a processor and a memory, wherein the memory has a computer program stored thereon, and the processor is configured to execute the computer program stored on the memory to enable the device to perform the method of any one of claims 1 to 8.

13. A communication device, comprising a processor and a memory, wherein the memory has a computer program stored thereon, and the processor is configured to execute the computer program stored on the memory to enable the device to perform the method of claim 9.

14. A computer-readable storage medium, having instructions stored thereon, wherein when the instructions are executed, the method of any one of claims 1 to 8 is performed.

15. A computer-readable storage medium, having instructions stored thereon, wherein when the instructions are executed, the method of claim 9 is performed.
